# FASCICULE DE BREVET EUROPEEN

(11) **EP 2 382 073 B1**
(45) Date de publication et mention de la délivrance du brevet: **28.11.2018**
(21) Numéro de dépôt: 10704384.6
(22) Date de dépôt: 18.01.2010
(51) Int. Cl.: B29C 33/30, B29C 70/44, B29C 70/48

(54) **DISPOSITIF DE FABRICATION D'UNE PIÈCE EN MATÉRIAU COMPOSITE PAR MOULAGE PAR TRANSFERT DE RÉSINE**
VORRICHTUNG ZUR HERSTELLUNG EINES TEILS AUS EINEM VERBUNDMATERIAL DURCH KUNSTHARZINJEKTION
DEVICE FOR MAKING A PART OF A COMPOSITE MATERIAL BY RESIN-TRANSFER MOULDING

(30) Priorité: 23.01.2009 FR 0900300
(43) Date de publication de la demande: 02.11.2011
(73) Titulaire: Société Lorraine de Construction Aéronautique (SLCA), 57190 Florange (FR); Arts & Metiers Paris Tech, 57070 Metz (FR); Le Pole De Plasturgie De L'Est, 57506 Saint Avold (FR); Ateliers Cini, 54510 Tomblaine (FR)
(72) Inventeur: D'ACUNTO, Alain, F-57640 Saint Barbe (FR); MARTIN, Patrick, F-54600 Villers-les-Nancy (FR); MIHALUTA, Marius, F-57000 Metz (FR); PERRIN, Henri-François, F-57420 Pontoy (FR); BETTEGA, Louis, F-57220 Boucheporn (FR); CAUCHOIS, Jean-Pierre, F-67510 Obersteinbach (FR); CINI, Jérôme, F-54770 Laitre S/s Amance (FR); PRADELLA, Serge, F-91160 Longjumeau (FR); FRANCISCO, Paulo, 95870 Bezons (FR)
(74) Mandataire: Gaillarde, Frédéric F. Ch.
(86) Numéro de dépôt international: PCT/FR2010/000039
(87) Numéro de publication internationale: WO 2010/084263

(56) Documents cités:
- EP-A- 1 859 920
- US-A- 5 824 249
- US-B1- 6 557 201

## Description

L'invention se rapporte à un dispositif de fabrication de pièces en matériau composite par moulage par transfert de résine conformément à la revendication 1.

Plusieurs procédés de moulage connus par imprégnation de fibres avec de la résine peuvent être utilisés pour réaliser les pièces en matériau composite et, notamment, les procédés de moulage employant des moules fermés.

En premier lieu, on peut citer le procédé de moulage par transfert de résine ou RTM, pour "Resin Transfert Molding".

Dans ce procédé RTM, un ensemble d'éléments fibreux est positionné de manière particulière autour d'un support et l'ensemble est placé à l'intérieur d'un moule fermé dont la forme générale correspond à celle de la pièce-à réaliser.

Dans le procédé RTM traditionnel, ce moule est constitué d'un moule femelle ou matrice et d'une partie contre-moule ou poinçon.

On injecte alors une résine dans le moule puis on la polymérise en lui apportant de l'énergie. Les molécules de cette résine commencent alors à se lier entre elles et à former un réseau solide. On obtient ainsi une pièce rigide en matériau composite formé de fibres et de résine polymérisée.

On peut, également, citer le procédé de moulage par infusion de résine.

De façon générale, un tel procédé met en oeuvre plusieurs étapes parmi lesquelles figure la mise en place d'éléments de renfort fibreux sur la forme d'un moule.

Le moule est ensuite refermé par l'intermédiaire d'un couvercle souple permettant le passage contrôlé d'une résine qui va infuser à l'intérieur des éléments de renfort fibreux puis polymériser, afin de donner une pièce rigide.

La propagation de la résine se fait par une force motrice créée par une dépression en certains points du couvercle, vers lesquels la résine introduite dans le moule se déplace.

Dans le procédé d'infusion traditionnel, l'outillage de moulage est ainsi formé d'un moule matrice et d'un couvercle étanche tel qu'une bâche comme partie contre moule.

On connaît de l'art antérieur le document US 5 824 249 A qui décrit un outillage de moulage.

Ces procédés, qu'ils soient RTM standard ou moulage par infusion de résine, sont des technologies dans lesquelles l'outillage de moulage est lourd et conçu pour une forme de pièce spécifique destinée à être réalisée. Ceci engendre des coûts élevés d'outillage pour pouvoir produire des pièces très variées.

De plus, cet outillage peut avoir une longévité très limitée. En effet, on comprend que, dans un outillage RTM standard, la détérioration du moule matrice ou du contre-moule ou des deux implique la détérioration de l'outillage ainsi constitué dans son ensemble.

Enfin, de part la mise au point complexe d'un outillage de moulage adapté à un type spécifique de pièce en matériau composite, ces technologies sont limitées aux formes de pièces en matériau composite peu ou moyennement complexes, dont les caractéristiques sont peu élaborées.

La présente invention vise à résoudre les inconvénients précités.

Ainsi, un but de la présente invention est de proposer un dispositif de fabrication de pièces en matériau composite par moulage par injection de résine dont la complexité est réduite et l'outillage de moulage simplifié par rapport à l'outillage des procédés à moule fermé précités.

Un autre but de la présente invention est de proposer un dispositif de fabrication de pièces en matériau composite par moulage par injection de résine dont l'outillage de moulage est flexible, adaptable à la forme des pièces à concevoir tout en étant facilement remplaçable.

Il est également désirable d'offrir un dispositif de fabrication de pièces en matériau composite par moulage par injection de résine permettant

Ainsi, un autre but de la présente invention est de proposer un dispositif de fabrication de pièces en matériau composite par moulage par injection de résine permettant de réduire les coûts et les temps de réalisation et de préparation des pièces en matériau composite.

A cet effet, l'invention concerne un dispositif de fabrication d'une pièce en matériau composite par moulage par injection de résine comprenant un moule de fabrication dans lequel est destiné à être disposée une préforme de la pièce susceptible d'être imprégnée de résine, remarquable en ce que le moule de fabrication est subdivisé en une matrice et un ou plusieurs éléments structurels mobiles destinés à être indexés sur la matrice, l'ensemble formant, après assemblage, une empreinte correspondant à la forme de la pièce à fabriquer.

Il convient de préciser que bien évidemment la matrice peut être de forme quelconque.

Le dispositif selon l'invention comprend en outre:
- des moyens d'injection adaptés pour réaliser une imprégnation mixte de la préforme avec résine injectée;
- les moyens d'injection sont repartis sur la surface du moule de sorte qu'elle favorise la diffusion de la résine de façon transversale et/ou laminaire.

Le dispositif selon l'invention pourra comprendre l'une des caractéristiques suivantes prises seules ou en combinaison :
- la matrice présente une forme plane ;
- les éléments structurels démontables sont des blocs géométriques tridimensionnels indépendants dont la forme et les dimensions sont adaptées à la forme et aux dimensions de la pièce à fabriquer
- les éléments structurels démontables pourront inclure des noyaux souples ou rigides de tout type dont la forme et les dimensions sont adaptées aux structures creuses.;
- les éléments structurels sont aptes à répartir la résine de façon homogène ;
- les éléments structurels du moule sont aptes à assurer un rôle d'évent ;
   le dispositif comprend, en outre, un système d'étanchéité des éléments structurels vis-à-vis de la résine injectée dans le moule de fabrication.

La divulgation a, en outre, pour objet un procédé de mise en oeuvre du dispositif défini ci-dessus, ce procédé comprenant au moins une étape dans laquelle on indexe un ou plusieurs éléments structurels mobiles du moule sur la matrice du moule de sorte que l'ensemble forme, après assemblage, une empreinte correspondant à la forme de la pièce à fabriquer.

Le procédé selon la divulgation pourra également comprendre la caractéristique suivante :
Le procédé comprend, en outre une étape dans laquelle on réalise une imprégnation transverse par rapport à un plan de la préforme et une imprégnation laminaire par rapport à ce plan de la préforme simultanément.

L'invention sera mieux comprise et d'autres avantages et caractéristiques apparaîtront à la lecture de la description qui va suivre, donnée à titre d'exemple non limitatif, et grâce aux dessins annexés parmi lesquels:
- la figure 1 est une vue en coupe d'un mode de réalisation d'un dispositif de fabrication d'une pièce en matériau composite par moulage par injection de résine selon l'invention ;
- la figure 2 est une vue en perspective du dispositif de la figure 1;
- la figure 3 est une vue en perspective agrandie d'un système d'étanchéité du dispositif de la figure 2.

La fabrication d'une pièce en matériau composite consiste essentiellement à mouler grâce à un dispositif de fabrication adapté un élément composite par injection d'une résine liquide dans une armature de fibres de renfort essentiellement sèches préalablement préformées sensiblement suivant la forme du profil de la pièce et prédisposées dans un moule fermé.

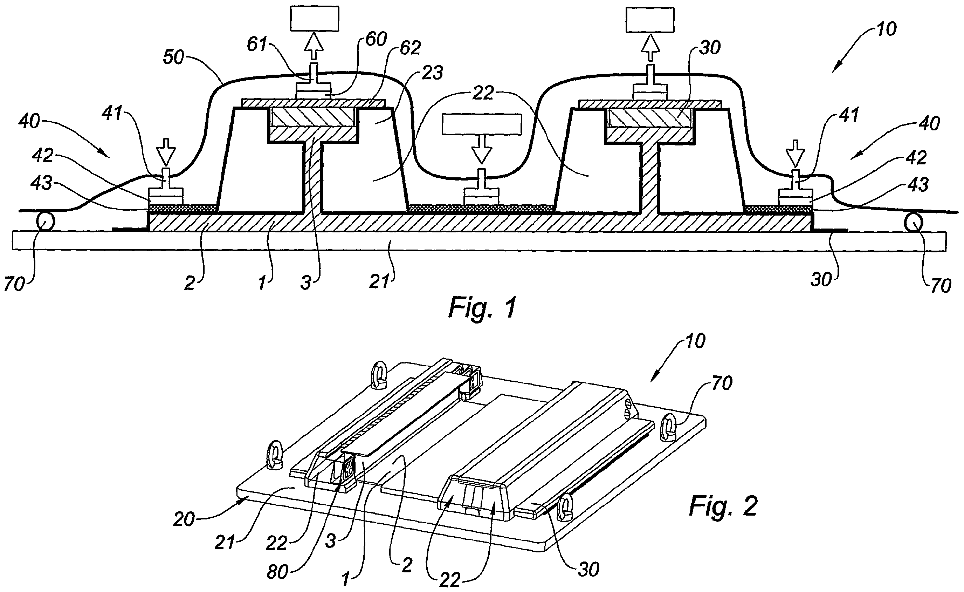

On observe sur les figures 1 et 2 un dispositif 10 de fabrication d'une pièce en matériau composite par moulage par injection de résine.

Ce dispositif de fabrication 10 comprend une cavité de moulage (non illustrée) destinée à recevoir un moule de fabrication 20 dans lequel est destinée à être disposée une préforme 1 susceptible d'être imprégnée de résine pour réaliser la pièce en matériau composite.

Selon l'invention, le moule 20 est subdivisé en une matrice 21 de moulage sur laquelle vont venir reposer et être indexés un ou plusieurs éléments structurels 22 de moulage indépendants et mobiles de sorte que l'ensemble forme, après assemblage, une empreinte correspondant à la forme du profil de la pièce à concevoir.

La matrice 21 de moulage est, en l'espèce et à titre d'exemple seulement, plane.

Les éléments structurels 22, quant à eux, sont aptes à être déplacés sur la matrice de moulage 21 en fonction de la forme des pièces à réaliser. Ce sont des blocs géométriques 23 tridimensionnels dont la forme, les dimensions, l'épaisseur et le positionnement sur la matrice 21 est adapté suivant la forme du profil de la pièce à réaliser. Ils respectent, ainsi, les contraintes géométriques, dimensionnelles et d'épaisseur de la pièce.

On comprendra aisément qu'un tel moule offre l'avantage d'être simple à mettre en oeuvre, flexible, adaptable à la forme des pièces à concevoir.

Un seul moule permet, en effet, de concevoir différents types de pièces en matériau composite réduisant ainsi les coûts liés à l'outillage.

Par ailleurs, avec un tel moule, les différents éléments constitutifs sont facilement remplaçables sans que soit nécessaire de remplacer l'ensemble du moule. La longévité des moules est ainsi améliorée.

Avec un tel outillage, on réalise, d'une part, la préforme 1 des fibres de renfort et, d'autre part, la pièce finale en matériau composite.

Dans l'exemple non limitatif illustré sur les figures 1 et 2, deux séries de deux éléments structurels 22 identiques sont agencées parallèlement sur la matrice 21 de moulage de façon à former une préforme 1 présentant une base plane 2 munie de protrusions 3.

Dans une variante de réalisation, un tel outillage de moulage peut être utilisé pour la réalisation de pièces en matériau composite bidimensionnelles.

De plus, il est également adapté pour être utilisé lors de la fabrication de pièces de structure monolithique, sandwich ou intégrant des noyaux creux.

Par ailleurs, comme illustré sur les figures 1 et 2, le dispositif 10 de fabrication comprend également des moyens de recouvrement 30 de la préforme 1 réalisée tels que des couvercles répartis sur la surface de la préforme 1 non recouverte d'éléments structurels 22 de moulage. On peut ainsi observer sur la figure 1, dans un exemple non limitatif de la présente invention, deux couvercles disposés, chacun, sur la barre du T des protrusions 3 de la préforme 1 formée. Ces couvercles permettent d'assurer la bonne conformation géométrique de la partie supérieure des protrusions 3.

Pour imprégner la préforme 1 avec de la résine, le moule 20 est relié à un conteneur de résine (non représenté) lui-même placé à l'intérieur de moyens de chauffage (non représentés) tels qu'un four ou tout autre moyen de chauffage approprié. Le conteneur est relié au moule 20 par des moyens d'injection 40 de résine.

Ces moyens d'injection de résine 40 comprennent plusieurs injecteurs de résine 41 associés, chacun, de façon connue à un distributeur 42, l'ensemble étant disposé sur une grille de distribution 43 reposant sur une partie des moyens de recouvrement 30.

Ces moyens d'injection 40 sont répartis sur toute la surface du moule 20 de sorte de réaliser une imprégnation mixte c'est-à-dire une imprégnation transverse et/ou une imprégnation laminaire de manière simultanée ou séquencée de la préforme 1 avec la résine injectée. Le mode d'imprégnation transverse est lié à la présence de la grille de distribution 43. Le mode d'imprégnation laminaire est lié à l'absence de grille de distribution 43.

De plus, les éléments structurels 22 de moulage du moule sont aptes à garantir le compactage de la préforme 3 et le dimensionnel des zones concernées par les éléments structurels 22 de façon homogène dans le moule 20.

Par ailleurs, tel qu'illustré sur la figure 1, le moule 20 est associé à une bâche 50 destinée à refermer le moule 20 et assurer le rôle de contre moule.

Cette bâche 50 est une membrane imperméable aux gaz qui recouvre l'ensemble de la matrice de moulage 21, de la préforme 1 et des éléments structurels 22 de moulage. Elle peut être réalisée à partir de matériau plastique, de résine ou de tout autre moyen connu.

Par ailleurs, elle présente des passages traversants ménagés pour recevoir les injecteurs 41 des moyens d'injection de résine 40 et les évents décrits plus loin.

Le moule 20 est également équipé de joints périphériques d'étanchéité 70 assurant l'étanchéité entre la bâche 50 et le moule 20, l'ensemble constituant ainsi un volume étanche matérialisant le volume de la pièce à réaliser.

Dans une variante de réalisation du dispositif 10 de la présente invention, une seconde bâche peut être utilisée pour garantir l'étanchéité et assurer un compactage homogène et continu de la préforme 1 durant la phase de polymérisation de la résine injectée dans la préforme 1.

L'injection de résine est réalisée sous vide. Par l'intermédiaire de la bâche 50 et des joints d'étanchéité 70, on peut ainsi réaliser un différentiel de pression entre l'extérieur et le volume étanche, ce différentiel exerçant une force compressive lors de l'injection de la résine sur la préforme 1 située à l'intérieur du volume étanche.

Pour cela, le dispositif 10 comprend des moyens 60 de réalisation du vide. Ces moyens comprennent une pompe à vide (non représentée) associée à des évents 61 c'est-à-dire à des conduits de dégazage permettant l'évacuation de l'air et des gaz dégagés lors de l'injection de résine dans le moule 20.

Dans l'exemple non limitatif illustré sur la figure 1, un évent 61 est placé au sommet de chacune des deux séries d'éléments structurels 22 de moulage du moule 20 par l'intermédiaire d'un frein d'écoulement 62.

Avantageusement, les éléments structurels 22 de moulage du moule 20 associés aux éléments de recouvrement 30 sont aptes à assurer la fonction d'évents 61.

Par ailleurs, dans un mode de réalisation de la présente invention, le moule 20 peut être disposé à l'intérieur d'un dispositif chauffant (non représenté). On peut citer, comme exemples non limitatifs de dispositif chauffant, une étuve, un autoclave ou un moule autochauffant. L'installation de ce dispositif dans un autoclave offre la possibilité d'augmenter les forces de compactage exercées sur la bâche 50 et d'augmenter la force motrice de transfert de la résine dans la préforme 1.

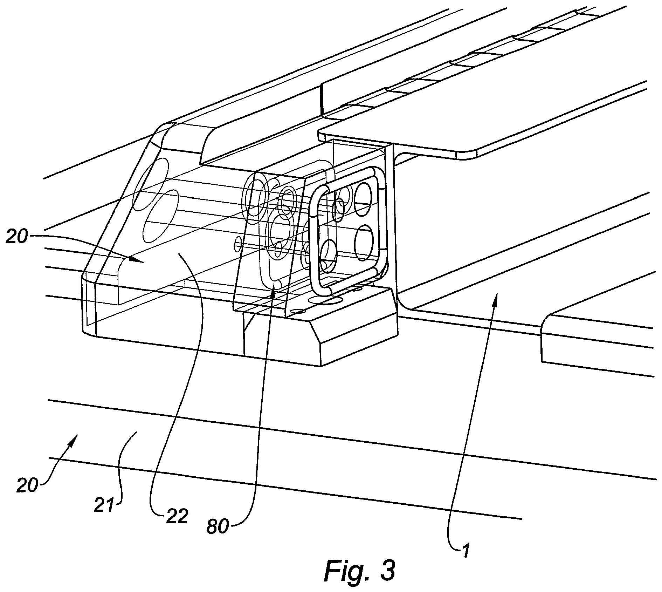

Tel qu'illustré sur les figures 2 et 3, le dispositif 10 peut également comprendre un système d'étanchéité 80 destiné à éviter la pénétration de la résine injectée dans le moule 20 dans les éléments structurels 22 de ce dernier. Cette protection est réalisée par un joint torique 80.

Un procédé de mise en oeuvre du dispositif 10 décrit précédemment est le suivant.

En premier lieu, on place une armature de renforts fibreux secs qui vont concevoir la pièce en matériau composite sur la matrice 21 de moulage du moule 20 du dispositif 10.

Ensuite, on plaque un ou plusieurs éléments structurels 22 de moulage prédéterminés sur tout ou partie de la préforme dans une configuration fonction du profil de la pièce en matériau composite à réaliser. L'ensemble des protrusions 3 est ainsi pris en sandwich entre la matrice 21 et les éléments structurels 22 de moulage assurant ainsi la réalisation de la préforme 1.

A l'étape suivante, on coiffe l'ensemble par la bâche 50 pour refermer le moule 20, bâche 50 sous laquelle auront été préalablement disposés les moyens d'injection 40 et les évents 61.

Préalablement et si nécessaire, on peut réaliser une étape de dégazage dans laquelle on dégaze la résine dans le conteneur afin d'éviter que trop de bulles soient injectées dans le moule par l'intermédiaire des conduits des injecteurs.

Si nécessaire, on chauffe la résine afin d'obtenir une viscosité adaptée au transfert de résine dans la préforme 1. La résine utilisée peut être une résine thermodurcissable ou thermoplastique.

A l'étape suivante, on procède à l'injection de la résine par les injecteurs 41 ménagés à cet effet dans le dispositif 10.

De préférence, l'infusion de résine est ensuite réalisée sous maintien du vide.

La résine se répand dans la préforme 1 en remplissant les zones de vide qui séparent les renforts fibreux et les imprègne.

Selon l'invention, l'imprégnation de résine de la préforme 1 est réalisée de manière simultanée ou séquencée.

Ceci offre l'avantage d'offrir à la pièce à concevoir des tolérances dimensionnelles sur les zones sensibles de la pièce (protrusions 3), contrairement à des zones courantes pour lesquelles la tolérance dimensionnelle peut être moins contraignante.

De plus, de part la possibilité de disposer des répartiteurs de résines de façon multiple sur la surface du moule, le temps de cycle de réalisation d'une pièce est réduit car le temps d'injection est lui-même réduit.

Le vide créé grâce à la pompe à vide associée aux évents 61 génère, comme décrit précédemment, un différentiel de pression entre le volume étanche délimité par la bâche 50 et le moule 20 du dispositif 10 et l'extérieur.

De cette manière, l'air extérieur crée une force de compression agissant sur la bâche 50 qui se presse sur les éléments structurels 22 de moulage et la préforme 1 facilitant l'infusion de la résine dans la préforme 1.

A l'étape suivante, on procède à la polymérisation de la résine, soit à température ambiante soit par chauffage. Les molécules de cette résine se lient entre elles et forment un réseau solide. On obtient ainsi une pièce en matériau composite rigide formé de fibres et de résine polymérisée.

La pièce en matériau composite est ensuite démoulée lorsque la bâche 50 est retirée. Cette pièce présente la forme définie par l'association de la matrice 21 de moulage et des éléments structurels 22 mobiles du moule 20 du dispositif 10.

L'homme de l'art appréciera par rapport aux dispositifs de fabrication de pièces en matériau composite connus, un dispositif offrant un outillage simplifié qui n'est pas limité à la réalisation d'une seule forme de pièce spécifique.

## Revendications

1. Dispositif (10) de fabrication d'une pièce en matériau composite par moulage par injection de résine comprenant un moule (20) de fabrication dans lequel est destinée à être disposée une préforme (1) de la pièce susceptible d'être imprégnée de résine, ledit moule (20) de fabrication étant subdivisé en une matrice (21) et un ou plusieurs éléments structurels (22) mobiles destinés à être indexés sur la matrice (21), l'ensemble formant, après assemblage, une empreinte correspondant à la forme de la pièce à fabriquer, ledit dispositif étant caractérisé en ce qu"il comprend :
- des moyens de recouvrement (30) de la préforme (1), répartis sur la surface de la préforme (1) non recouverte d'éléments structurels (22),
- des moyens d'injection (40) adaptés pour réaliser une imprégnation de manière simultanée ou séquencée de la préforme (1) avec la résine injectée, lesdits moyens d'injection (40) étant répartis sur la surface du moule (20) de sorte qu'elle favorise la diffusion de la résine de façon transverse et laminaire, lesdits moyens d'injection (40) comprenant des injecteurs de résine (41) associés chacun à un distributeur (42) et étant disposés sur une grille de distribution (43) reposant sur une partie des moyens de recouvrement (30).

2. Dispositif selon la revendication précédente **caractérisé en ce que** la matrice (21) présente une forme plane.

3. Dispositif selon l'une des revendications précédentes **caractérisé en ce que** les éléments structurels (22) démontables sont des blocs géométriques tridimensionnels indépendants dont la forme et les dimensions sont adaptées à la forme et aux dimensions de la pièce à fabriquer.

4. Dispositif selon l'une des revendications précédentes **caractérisé en ce que** les éléments structurels démontables pourront inclure des noyaux souples ou rigides de tout type dont la forme et les dimensions sont adaptées aux structures creuses.

5. Dispositif selon l'une des revendications précédentes **caractérisé en ce que** les éléments structurels (22) sont aptes à assurer un rôle d'évent (61).

6. Dispositif selon l'une des revendications précédentes **caractérisé en ce qu'**il comprend, en outre, un système d'étanchéité (80) des éléments structurels (22) vis-à-vis de la résine injectée dans le moule (20) de fabrication.

## Patentansprüche

1. Vorrichtung (10) zur Herstellung eines Teils aus Verbundmaterial durch Resin Injection Moulding, umfassend eine Herstellungsform (20), in welcher eine Vorform (1) des Teils vorgesehen ist, angeordnet zu werden, welche mit Harz imprägniert werden kann, wobei die Herstellungsform (20) in eine Matrix (21) und ein oder mehrere bewegliche Strukturelemente (22) unterteilt ist, die dazu vorgesehen sind, an der Matrix (21) indexiert zu werden, wobei die Baugruppe nach Zusammenfügen eine Ausprägung bildet, die der Form des herzustellenden Teils entspricht, wobei die Vorrichtung **dadurch gekennzeichnet ist, dass** sie umfasst:
- Mittel zum Abdecken (30) der Vorform (1), welche an der nicht von Strukturelementen (22) abgedeckten Oberfläche der Vorform (1) angeordnet sind,
- Einspritzmittel (40), die dafür angepasst sind, ein Imprägnieren der Vorform (1) mit dem eingespritzten Harz in gleichzeitiger oder sequenzierter Weise auszuführen, wobei die Einspritzmittel (40) an der Oberfläche der Form (20) verteilt sind, sodass sie die Verteilung des Harzes in quer laufender und geschichteter Weise unterstützt, wobei die Einspritzmittel (40) Harzeinspritzer (41) umfassen, die jeder einem Verteiler (42) zugeordnet sind und an einem Verteilgitter (43) angeordnet sind, das auf einem Teil der Abdeckmittel (30) ruht.

2. Vorrichtung nach dem vorstehenden Anspruch, **dadurch gekennzeichnet, dass** die Matrix (21) eine ebene Form aufweist.

3. Vorrichtung nach einem der vorstehenden Ansprüche, **dadurch gekennzeichnet, dass** die demontierbaren Strukturelemente (22) unabhängige dreidimensionale geometrische Blöcke sind, von denen die Form und die Abmessungen auf die Form und die Abmessungen des herzustellenden Teils angepasst sind.

4. Vorrichtung nach einem der vorstehenden Ansprüche, **dadurch gekennzeichnet, dass** die demontierbaren Strukturelemente elastische oder starre Kerne jeden Typs beinhalten könnten, von denen die Form und die Abmessungen auf die Hohlstrukturen angepasst sind.

5. Vorrichtung nach einem der vorstehenden Ansprüche, **dadurch gekennzeichnet, dass** die Strukturelemente (22) in der Lage sind, eine Entlüftungsrolle (61) sicherzustellen.

6. Vorrichtung nach einem der vorstehenden Ansprüche, **dadurch gekennzeichnet, dass** sie weiter ein System zum Abdichten (80) der Strukturelemente (22) gegenüber dem in die Herstellungsform (20) eingespritzten Harz umfasst.

## Claims

1. A device (10) for manufacturing a composite material part by resin injection molding, comprising a manufacturing mold (20) in which a preform (1) of the part likely to be impregnated with resin is intended to be disposed, said manufacturing mold (20) being split into a matrix (21) and one or several movable structural elements (22) intended to be indexed on the matrix (21), the set forming, after assembly, a cavity corresponding to the shape of the part to be manufactured, said device being **characterized in that** it comprises:
- means (30) for covering the preform (1), distributed over the surface of the preform (1) not covered with structural elements (22),
- injection means (40) adapted to carry out a simultaneous or sequential impregnation of the preform (1) with the injected resin, said injection means (40) being distributed over the surface of the mold (20) such that it promotes the diffusion of the resin in a transverse and laminar manner, said injection means (40) comprising resin injectors (41) each associated to a distributor (42) and being disposed on a distribution grid (43) resting on a portion of the covering means (30).

2. The device according to the preceding claim, **characterized in that** the matrix (21) has a planar shape.

3. The device according to any of the preceding claims, **characterized in that** the removable structural elements (22) are independent three-dimensional geometric blocks whose shape and dimensions are adapted to the shape and dimensions of the part to be manufactured.

4. The device according to any of the preceding claims, **characterized in that** the removable structural elements may include flexible or rigid cores of any type whose shape and dimensions are adapted to the hollow structures.

5. The device according to any of the preceding claims, **characterized in that** the structural elements (22) are capable of ensuring a venting role.

6. The device according to any of the preceding claims, **characterized in that** it further comprises a system (80) for sealing the structural elements (22) from the resin injected into the manufacturing mold (20).
